# EUROPEAN PATENT APPLICATION

(11) **EP 4 718 522 A1**
(43) Date of publication of application: **01.04.2026**
(21) Application number: 25200162.3
(22) Date of filing: 04.09.2025
(51) Int. Cl.: H01M 4/134, H01M 4/36, H01M 4/38, H01M 4/587, H01M 4/133, H01M 4/04, H01M 4/1393, H01M 4/1395, H01M 4/02

(54) **NEGATIVE ELECTRODE OF SECONDARY BATTERY, METHOD FOR MANUFACTURING THE NEGATIVE ELECTRODE, AND SECONDARY BATTERY USING THE NEGATIVE ELECTRODE**

(30) Priority: 27.09.2024 JP 2024169487
(71) Applicant: Prime Planet Energy & Solutions, Inc., Chuo-ku, Tokyo 103-0022 (JP)
(72) Inventor: ONODERA, Naoto, Tokyo, 103-0022 (JP)
(74) Representative: Kuhnen & Wacker Patent- und Rechtsanwaltsbüro PartG mbB

(57) **Abstract**

A negative electrode (60) containing Si-containing particles (14, 16) and graphite particles (12) and being capable of suppressing capacity degradation when a secondary battery is repeatedly charged and discharged is provided. The negative electrode of a secondary battery of the present disclosure includes a negative electrode current collector (62), and a negative electrode active material layer (64) supported by the negative electrode current collector. The negative electrode active material layer contains graphite particles, first Si-containing particles (14), and second Si-containing particles (16). The content rate of Si in the first Si-containing particles is smaller than the content rate of Si in the second Si-containing particles. When a density of a molded body obtained by uniaxially pressurizing and molding 1 g of particles at 25°C and at 60 MPa into a tablet having a diameter of 20 mm is defined as a consolidation density, the consolidation density of the first Si-containing particles is 0.9 g/cm³ or more, and that of the second Si-containing particles is less than 0.9 g/cm³.

## Description

### BACKGROUND OF THE DISCLOSURE

### 1. Field

The present disclosure relates to a negative electrode of a secondary battery, and a method for manufacturing the negative electrode. The present disclosure also relates to a secondary battery using the negative electrode.

### 2. Background

In recent years, secondary batteries are suitably used for, for example, portable power sources for personal computers, portable terminals, and the like, and power sources for driving vehicles such as battery electric vehicles (BEV), hybrid electric vehicles (HEV), and plug-in hybrid electric vehicles (PHEV).

In application of power sources for driving a vehicle, in particular, application of power sources for driving BEV, secondary batteries have been required to have higher capacities from the viewpoint of increasing traveling distance of vehicles. Si-containing particles are known as a negative electrode active material having high capacity. It is known that the Si-containing particles achieve higher capacity of secondary batteries (see, for example, Japanese Patent Application Laid-Open No. 2015-38862). Japanese Patent Application Laid-Open No. 2015-38862 discloses a technique using both Si-containing particles and graphite particles such as natural graphite together as the negative electrode active material.

### SUMMARY

However, Si-containing particles have high capacity but show a large change in volume due to expansion/contraction in charging and discharging a secondary battery. Thus, when both Si-containing particles and graphite particles are used together, filling property of these particles decreases when a secondary battery is repeatedly charged and discharged, which may cause, for example, breakage of a conductive path. Therefore, when both Si-containing particles and graphite particles are used together, there is a problem that cycle characteristics decrease, specifically, a problem that capacity degradation becomes large when the secondary battery is repeatedly charged and discharged.

In view of the above circumstances, an object of the present disclosure is to provide a negative electrode containing Si-containing particles and graphite particles and being capable of suppressing capacity degradation when the secondary battery is repeatedly charged and discharged.

A negative electrode of a secondary battery of the present disclosure includes a negative electrode current collector, and a negative electrode active material layer supported by the negative electrode current collector. The negative electrode active material layer contains graphite particles, first Si-containing particles, and second Si-containing particles. The content rate of Si in the first Si-containing particles is smaller than the content rate of Si in the second Si-containing particles. When a density of a molded body obtained by uniaxially pressurizing and molding 1 g of particles at 25°C and at 60 MPa into a tablet having a diameter of 20 mm is defined as a consolidation density, the consolidation density of the first Si-containing particles is 0.9 g/cm³ or more, and the consolidation density of the second Si-containing particles is less than 0.9 g/cm³.

Such a configuration can provide a negative electrode containing Si-containing particles and graphite particles and capable of suppressing capacity degradation when the secondary battery is repeatedly charged and discharged.

In another aspect, a method for manufacturing a negative electrode of a secondary battery of the present disclosure includes: preparing a negative electrode paste containing graphite particles, first Si-containing particles, second Si-containing particles, and a dispersion medium; applying the negative electrode paste to a negative electrode current collector; drying the applied negative electrode paste to form a negative electrode active material layer; and pressing the negative electrode active material layer. The content rate of Si in the first Si-containing particles is smaller than the content rate of Si in the second Si-containing particles. When a density of a molded body obtained by uniaxially pressurizing and molding 1 g of particles at 25°C and at 60 MPa into a tablet having a diameter of 20 mm is defined as a consolidation density, the consolidation density of the first Si-containing particles is 0.9 g/cm³ or more, and the consolidation density of the second Si-containing particles is less than 0.9 g/cm³.

The negative electrode obtained by such a configuration can impart high capacity degradation resistance to a secondary battery when the secondary battery is repeatedly charged and discharged.

In another aspect, a secondary battery of the present disclosure includes a positive electrode, a negative electrode, and an electrolyte. This negative electrode is the negative electrode described above.

Such a configuration can provide a secondary battery with high capacity degradation resistance when the secondary battery is repeatedly charged and discharged.

### BRIEF DESCRIPTION OF THE DRAWINGS

FIG. 1 is a sectional view schematically showing a configuration of a negative electrode of a secondary battery according to one embodiment of the present disclosure;
FIG. 2 is a sectional view schematically showing a configuration of particles included in a negative electrode active material layer of the negative electrode of FIG. 1;
FIG. 3 is a sectional view schematically showing a configuration of a lithium ion secondary battery constructed using a negative electrode of a secondary battery according to one embodiment of the present disclosure; and
FIG. 4 is a schematic disassembled view showing a configuration of a wound electrode body of the lithium ion secondary battery of FIG. 3.

### DETAILED DESCRIPTION OF THE EMBODIMENTS

Hereinafter, embodiments according to the present disclosure will be described with reference to the drawings. Matters not specifically mentioned in this specification but required for carrying out the present disclosure can be understood as matters of design of a person skilled in the art based on the related art in the field. The present disclosure can be carried out on the basis of the contents disclosed in this specification and the common general technical knowledge in the field. Moreover, in the drawings below, members and parts having the same effect will be given the same reference numerals. The dimensional relationships (length, width, thickness, and the like) in each drawing do not reflect the actual dimensional relationships. It should be noted that in this specification, A and B are included in the numerical range expressed as "A to B".

It should be noted that a "secondary battery" in this specification refers to an electricity storage device capable of being repeatedly charged and discharged. Furthermore, a "lithium ion secondary battery" in this specification refers to a secondary battery that uses lithium ions as charge carriers and that can be charged and discharged by movement of electric charges accompanying lithium ions between positive and negative electrodes.

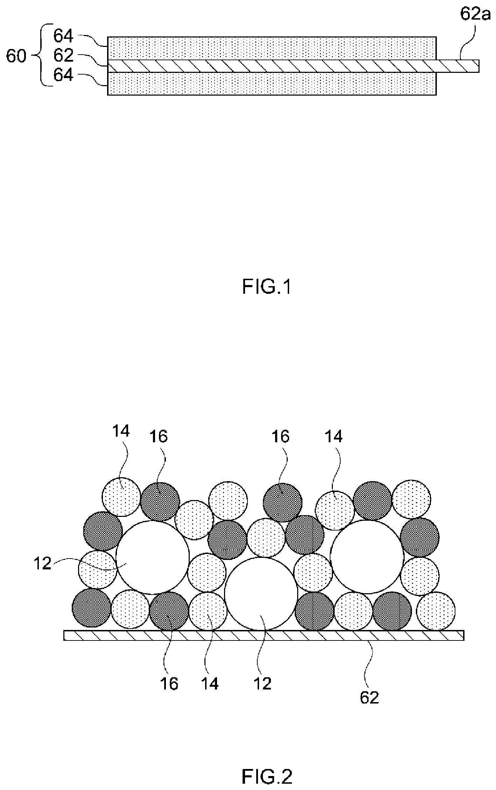

A negative electrode disclosed herein is used for a secondary battery, and suitably used for a lithium ion secondary battery. One embodiment of a negative electrode disclosed herein is specifically described with reference to FIG. 1. FIG. 1 is a sectional view schematically showing a negative electrode 60 of an example according to this embodiment, and the sectional view is along a thickness direction and a width direction. The negative electrode 60 according to this embodiment shown in FIG. 1 is a negative electrode of a lithium ion secondary battery.

As shown in the drawing, the negative electrode 60 includes a negative electrode current collector 62, and a negative electrode active material layer 64 supported by the negative electrode current collector 62. In other words, the negative electrode 60 includes the negative electrode current collector 62, and the negative electrode active material layer 64 provided on the negative electrode current collector 62. The negative electrode active material layer 64 may be provided only on one surface of the negative electrode current collector 62 or may be provided on both surfaces of the negative electrode current collector 62 as shown in the drawing. The negative electrode active material layer 64 is desirably provided on both surfaces of the negative electrode current collector 62.

As shown in the drawing, a negative electrode active material layer non-formed portion 62a that is not provided with the negative electrode active material layer 64 may be provided at one end in the width direction of the negative electrode 60. In the negative electrode active material layer non-formed portion 62a, the negative electrode current collector 62 is exposed so that the negative electrode active material layer non-formed portion 62a can function as a current collecting part. However, the configuration for collecting current from the negative electrode 60 is not limited to this.

The negative electrode current collector 62 has a foil shape (or a sheet shape) in the example shown in the drawing, but is not limited to this shape. The negative electrode current collector 62 may have various forms such as a rod shape, a plate shape, or a mesh shape. The material for the negative electrode current collector 62 can be a highly conductive metal (for example, copper, nickel, titanium, and stainless steel) in a manner the same as or similar to a conventional lithium ion secondary battery, and among them, copper is desirable. As the negative electrode current collector 62, copper foil is particularly desirable.

Dimensions of the negative electrode current collector 62 are not particularly limited, and may be appropriately determined depending on battery design. When copper foil is used as the negative electrode current collector 62, the thickness of the foil is not particularly limited, and is, for example, 5 µm or more and 35 µm or less, and desirably 6 µm or more and 20 µm or less.

The negative electrode active material layer 64 contains a negative electrode active material. As the negative electrode active material, at least graphite particles, first Si-containing particles, and second Si-containing particles are used. This is described in detail with reference to FIG. 2. FIG. 2 is a schematic sectional view showing particles included in the negative electrode active material layer 64 shown in FIG. 1. As shown in FIG. 2, the negative electrode active material layer 64 includes graphite particles 12, first Si-containing particles 14, and second Si-containing particles 16. It should be noted that FIG. 2 is a schematic view, and therefore the number, distribution of particles, and the like, are not limited to those shown in FIG. 2.

Graphite constituting the graphite particles 12 may be natural graphite or artificial graphite, and may be amorphous carbon-coated graphite in which graphite is coated with an amorphous carbon material.

The shape of the graphite particles 12 is not particularly limited, and may be a scaly shape, a spherical shape, or the like. The graphite particles 12 are desirably spheroidized graphite particles. When the graphite particles 12 are spherical, the circularity of the graphite particles 12 is desirably 0.85 to 1, more desirably 0.88 to 1, and further desirably 0.90 to 1.

It should be noted that the "circularity" in this specification refers to a ratio of a circumference of a complete circle having the same area as a projected area of particle to a circumference of a projected image of the particle (i.e., circularity = circumference of complete circle having the same area as projected area of particle / circumference of projected image of particle). Accordingly, as the circularity is closer to 1, the particle projected image is closer to a complete circle, and the particle approaches a complete sphere. The circularity can be obtained by, for example, obtaining circularities of 100 or more particles using a commercially available static automated image analyzer and calculating an average of the obtained circularities.

The average particle diameter (D50) of the graphite particles 12 is not particularly limited. The average particle diameter (D50) of the graphite particles 12 is, for example, 1 µm to 30 µm, desirably 5 µm to 25 µm, more desirably 10 µm to 23 µm, and further desirably 12 µm to 20 µm.

It should be noted that the "average particle diameter (D50)" in this specification refers to a median diameter (D50), and refers to a particle diameter corresponding to 50% by volume of a cumulative frequency from the small-diameter particle side in volume-based particle size distribution based on a laser diffraction and scattering method. The average particle diameter (D50) can be obtained by using, for example, a commercially available laser diffraction and scattering type particle size distribution measurement device.

In a case of uniaxially pressurizing and molding 1 g of graphite particles 12 into a tablet having a diameter of 20 mm, a molding pressure when a density of a molded body is 1.7 g/cm³ is desirably 20 MPa or less, and more desirably 10 MPa to 18 MPa. The molding pressure can be easily measured using an automatic powder resistance measurement system (for example, "MCP-PD600" manufactured by Nittoseiko Analytech Co., Ltd.) and a 20-mm diameter probe (corresponding to a mold).

The content rate of graphite particles 12 with respect to the total of graphite particles 12, first Si-containing particles 14, and second Si-containing particles 16 is desirably 40% by mass to 90% by mass, more desirably 45% by mass to 85% by mass, and further more desirably 50% by mass to 80% by mass.

As the first Si-containing particles 14 and the second Si-containing particles 16, for example, particles of a Si-C composite material can be used. The Si-C composite material typically includes a carbon domain and a Si-containing domain. It should be noted that the first Si-containing particles 14 and the second Si-containing particles 16 may not be a Si-C composite material and may be Si particles, Si oxide particles, and the like.

Examples of the carbon domain include: a carbonized material of a carbon precursor (for example, petroleum pitch, coal pitch, and phenolic resin); graphite; and the like. The carbon domain suitably constitutes a carbon matrix. Thus, the Si-C composite material is suitably a material in which a plurality of Si-containing domains is dispersed in a carbon matrix. This case is advantageous because the carbon matrix can reduce a change in volume due to expansion/contraction of the Si-containing domains.

The Si-containing domain includes Si, and is constituted by, for example, Si, Si oxide (SiOₓ), Si nitride (SiNₓ), Si carbide (SiCₓ), and the like. The Si-containing domain is desirably constituted by at least one of Si or Si oxide (SiOₓ). The Si-containing domain may be fine particles. The content of oxygen in the Si-containing domain is desirably 10% by mass or less.

The average particle diameter of the Si-containing domain is, for example, 50 nm or less and may be 5 nm to 50 nm. It should be noted that the "average particle diameter of Si-containing domain" can be obtained as follows. Firstly, the negative electrode active material layer 64 is subjected to a FIB (focused ion beam) processing to produce a sample for scanning transmission electron microscopic (STEM) observation. The sample is subjected to an element analysis by EDX element mapping, and then a BF image (bright field image) and a HAADF image (high angle annular dark field image) are acquired. From contrasts and shapes obtained from the BF image and the HAADF image, diameters of the Si-containing domain can be obtained. Diameters of arbitrarily selected 10 or more Si-containing domains are obtained, and an average value of the diameters is defined herein as an "average particle diameter of the Si-containing domains".

The Si-C composite material may be, for example, a material in which fine particles including Si are dispersed inside carbon material; a material in which fine particles including Si enter voids of granulated porous graphite; and the like. The Si-C composite material may be a material in which fine particles including Si are attached to a surface of a carbon particle; a material in which carbon fine particles are attached to a surface of a particle including Si; and the like. From the viewpoint of suppressing the change in volume of Si, a material in which Si nanoparticles are dispersed inside the carbon material, and a material in which Si nanoparticles are dispersed in voids of the porous carbon materials are desirable, and a material in which Si nanoparticles are dispersed in voids of the porous carbon materials is more desirable.

The content rate of Si (S1) in the first Si-containing particles 14 is smaller than the content rate of Si (S2) in the second Si-containing particles 16. The content rate of Si (S1) in the first Si-containing particles 14 and the content rate of Si (S2) in the second Si-containing particles 16 are not particularly limited as long as this relationship is satisfied. However, when these content rates of Si are too low, the effect of improving the cycle characteristics may become small and the effect of achieving higher capacity of a secondary battery may become too small. On the other hand, when these content rates of Si are too high, a change in volume due to expansion/contraction of the first Si-containing particles 14 and the second Si-containing particles 16 may become too large when the secondary battery is repeatedly charged and discharged.

Therefore, the content rate of Si (S1) in the first Si-containing particles 14 is desirably 20% by mass to 55% by mass, and more desirably 25% by mass to 45% by mass. The content rate of Si (S2) in the second Si-containing particles 16 is desirably 45% by mass to 80% by mass, and more desirably 55% by mass to 75 % by mass.

A ratio (S 1/S2) of the content rate of Si (S1) in the first Si-containing particles 14 to the content rate of Si (S2) in the second Si-containing particles 16 is desirably 0.10 to 0.90, more desirably 0.20 to 0.80, and further desirably 0.40 to 0.75.

Herein, the density of a molded body obtained by uniaxially pressurizing and molding 1 g of particles at 25°C and at 60 MPa into a tablet having a diameter of 20 mm is defined as a consolidation density. This consolidation density is an index of filling property of particles. The higher the consolidation density of particles is, the higher the filling property of particles becomes. The consolidation density of the first Si-containing particles 14 is 0.90 g/cm³ or more. On the other hand, the consolidation density of the second Si-containing particles 16 is less than 0.90 g/cm³.

In this way, in the present disclosure, as the negative electrode active material, in addition to the graphite particles 12, the first Si-containing particles 14 having low content rate of Si and high consolidation density and the second Si-containing particles 16 having high content rate of Si and low consolidation density are used in combination. In particular, the consolidation density of the conventionally used Si-containing particles is usually less than 0.90/cm³. Therefore, the first Si-containing particles 14 have higher consolidation density than that of conventionally used Si-containing particles. With such a combination of particles, capacity degradation when the secondary battery is repeatedly charged and discharged can be suppressed. The reason thereof is thought to be as follow.

One of the causes of capacity degradation when the secondary battery is repeatedly charged and discharged includes breakage of a conductive path. In the Si-containing particles having a low content rate of Si, expansion / contraction is small at the time of charging and discharging of a secondary battery. Thus, as in the present disclosure, by increasing the consolidation density of the first Si-containing particles 14 having a low content rate of Si, that is, by enhancing the filling property of the first Si-containing particles 14 having a low content rate of Si, the filling state around the first Si-containing particles 14 can be maintained even after the secondary battery is repeatedly charged and discharged. Thus, breakage of a conductive path when the secondary battery is repeatedly charged and discharged can be suppressed.

On the other hand, in the Si-containing particles having a large content rate of Si, expansion / contraction is large at the time of charging and discharging of a secondary battery. Thus, as in the present disclosure, by setting the consolidation density of the second Si-containing particles 16 having a high content rate of Si to be small, that is, by setting the filling property of the second Si-containing particles 16 having a high content rate of Si to be low, deformation around the second Si-containing particles 16 due to expansion / contraction of the second Si-containing particles can be suppressed even after the secondary battery is repeatedly charged and discharged. Thus, breakage of a conductive path when the secondary battery is repeatedly charged and discharged can be suppressed.

Therefore, by using the first Si-containing particles 14 having a low content rate of Si and high consolidation density and the second Si-containing particles 16 having a high content rate of Si and low consolidation density in combination, capacity degradation due to a breakage of a conductive path when the secondary battery is repeatedly charged and discharged can be suppressed.

The consolidation density of the first Si-containing particles 14 is desirably 0.95 g/cm³ or more, more desirably 1.00 g/cm³ or more, further desirably 1.1 g/cm³ or more, and particularly desirably 1.2 g/cm³ or more. On the other hand, the consolidation density of the first Si-containing particles 14 may be 2.3 g/cm³ or less, 2.0 g/cm³ or less, 1.8 g/cm³ or less, or 1.5 g/cm³ or less.

The consolidation density of the second Si-containing particles 16 is desirably 0.88 g/cm³ or less, more desirably 0.86 g/cm³ or less, and further desirably 0.85 g/cm³ or less. On the other hand, the consolidation density of the second Si-containing particles 16 is desirably 0.50 g/cm³ or more, more desirably 0.65 g/cm³ or more, further desirably 0.75 g/cm³ or more, and particularly desirably 0.83 g/cm³ or more.

It should be noted that the consolidation density can be easily measured by using, for example, an automatic powder resistance measurement system (for example, "MCP-PD600" manufactured by Nittoseiko Analytech Co., Ltd.) and a 20-mm diameter probe (corresponding to a mold).

It should be noted that the consolidation density is affected by the circularity of the Si-containing particle. When the circularity of the Si-containing particle is increased, the consolidation density tends to become large. Therefore, when the circularity of the Si-containing particle is 0.85 to 1 (in particular, 0.90 to 1), the consolidation density tends to be 0.90 g/cm³ or more. On the other hand, when the circularity of Si-containing particle is less than 0.85, the consolidation density tends to be less than 0.90 g/cm³.

Furthermore, the particle diameter of the Si-containing particle also affects the consolidation density. Therefore, since the consolidation density is easily adjusted to 0.90 g/cm³ or more, the average particle diameter (D50) of the first Si-containing particles 14 is desirably 2 µm to 10 µm, more desirably 5 µm to 10 µm. Furthermore, since the consolidation density is easily adjusted to less than 0.90 g/cm³, the average particle diameter (D50) of the second Si-containing particles 16 is desirably 2 µm to 10 µm, more desirably 5 µm to 10 µm, and further desirably 6 µm to 9 µm.

The true density of the Si-containing particle also affects the consolidation density. Therefore, by adjusting compositions (the content rate of the constituting element) of the first Si-containing particles 14 and the second Si-containing particles 16, the consolidation density can be fine-adjusted.

The ratio of the average particle diameter (D50) of the graphite particles 12 to the average particle diameter (D50) of the first Si-containing particles 14 (D50 of the graphite particles 12 / D50 of the first Si-containing particles 14) is not particularly limited. From the viewpoint of a particularly high filling property, the ratio (D50 of the graphite particles 12 / D50 of the first Si-containing particles 14) is desirably 1.0 to 8.0, more desirably 1.0 to 5.0, further desirably 1.2 to 3.0, and particularly desirably 1.4 to 2.5.

The ratio of the average particle diameter (D50) of the graphite particles 12 to the average particle diameter (D50) of the second Si-containing particles 16 (D50 of the graphite particles 12 / D50 of the first Si-containing particles 16) is not particularly limited. From the viewpoint of a particularly high filling property, the ratio (D50 of the graphite particles 12 / D50 of the second Si-containing particles 16) is desirably 1.0 to 8.0, more desirably 1.0 to 5.0, further desirably 1.2 to 3.0, and particularly desirably 1.4 to 2.5.

The mass ratio between the first Si-containing particles 14 and the second Si-containing particles 16 is not particularly limited as long as the effect of the present disclosure is obtained, and is, for example, 10:90 to 90:10. The mass ratio (first : second) is desirably 20:80 to 80:20, more desirably 30:70 to 70:30, further desirably 35:65 to 70:30, and particularly desirably 45:55 to 60:40.

The total content of the first Si-containing particles 14 and the second Si-containing particles 16 with respect to the total of the graphite particles 12, the first Si-containing particles 14, and the second Si-containing particles 16 is desirably 10% by mass to 60% by mass, more desirably 15% by mass to 55% by mass, even more desirably 20% by mass to 50% by mass.

It should be noted that the first Si-containing particles 14 and the second Si-containing particles 16 can be produced according to a publicly known method. It should be noted that various methods for manufacturing particles of the Si-C composite material are publicly known (see, for example, Japanese Unexamined Patent Application, Publication No. 2015-38862, International Patent Publication No. 2014/046144, and prior art documents listed in this International Patent Publication).

The negative electrode active material layer 64 may contain components other than the negative electrode active material, and examples of the components include a binder, a conductive material, and the like. Examples of the binder used include styrene-butadiene rubber (SBR), carboxymethyl cellulose (CMC), polyacrylic acid (PAA), polyvinylidene fluoride (PVdF), and the like. CMC also functions as a thickener. Examples of the conductive material include carbon black such as acetylene black, carbon fibers, carbon nanotubes (CNT), and the like. Among these, CNT is desirable. When CNT is used as the conductive material, the negative electrode active material layer 64 may contain a dispersing agent of CNT.

The content of the negative electrode active material in the negative electrode active material layer 64 (that is, with respect to the total mass of the negative electrode active material layer 64) is desirably 90% by mass or more, and more desirably 95% by mass or more. The content of the binder in the negative electrode active material layer is desirably 0.1% by mass or more and 8% by mass or less, and more desirably 0.5% by mass or more and 5% by mass or less. The content of the conductive material in the negative electrode active material layer 64 is desirably 0.01% by mass or more and 3% by mass or less, and more desirably 0.05% by mass or more and 1% by mass or less.

The thickness of the negative electrode active material layer 64 is not particularly limited, and is, for example, 10 µm or more and 400 µm or less, and desirably 20 µm or more and 300 µm or less.

The density of the negative electrode active material layer 64 is not particularly limited, and is, for example, 0.7 g/cm³ or more, desirably 1.0 g/ cm³ or more, and more desirably 1.2 g/ cm³ or more. On the other hand, the density of the negative electrode active material layer 64 is, for example, 2.3 g/ cm³ or less, and may be 2.0 g/ cm³ or less.

The negative electrode 60 may include a member other than the negative electrode current collector 62 and the negative electrode active material layer 64. For example, an insulating layer (not shown) adjacent to the negative electrode active material layer 64 may be provided on the negative electrode active material layer non-formed portion 62a. The insulating layer contains, for example, insulating inorganic fillers.

The negative electrode 60 can be suitably manufactured by a manufacturing method including steps of preparing a negative electrode paste containing graphite particles 12, first Si-containing particles 14, second Si-containing particles 16, and a dispersion medium (hereinafter, also referred to as "paste preparation step"); applying the prepared negative electrode paste to a negative electrode current collector 62 (hereinafter, also referred to as "application step"); drying the applied negative electrode paste to form a negative electrode active material layer 64 (hereinafter, also referred to as "drying step"); and pressing the negative electrode active material layer 64 (hereinafter, also referred to as "pressing step"). In the manufacturing method, the content rate of Si (S1) in the first Si-containing particles 14 is smaller than the content rate of Si (S2) in the second Si-containing particles 16. The above-described consolidation density of the first Si-containing particles 14 is 0.9 g/cm³ or more, and the above-described consolidation density of the second Si-containing particles 16 is less than 0.9 g/cm³.

It should be noted that the "paste" in this specification refers to a mixture in which a solid content is partially or entirely dispersed in a dispersion medium, and encompasses so-called "slurry," "ink," and the like.

The paste preparation step can be carried out according to a publicly known method by mixing the graphite particles 12, the first Si-containing particles 14, the second Si-containing particles 16, and optional components (for example, a binder, a conductive material, and the like) with a dispersion medium (for example, water) using a publicly known mixer, stirrer, or the like.

The application step can be carried out according to a publicly known method. Specifically, for example, the application can be carried out in such a manner that the obtained negative electrode paste is applied onto the negative electrode current collector 62 with an application device such as a gravure coater, a comma coater, a slit coater, and a die coater.

The drying step can be performed according to a publicly known method. Specifically, for example, the above dispersion medium is removed, with a drier such as a drying furnace, from the negative electrode current collector 62 onto which the negative electrode paste has been applied, thereby forming the negative electrode active material layer 64. Thus, the drying can be carried out. A drying temperature and drying time are not particularly limited, and may be determined appropriately according to a solid content of the negative electrode paste. The drying temperature is, for example, 60°C or more and 200°C or less, desirably 70°C or more and 150°C or less. The drying time is, for example, 10 seconds or more and 30 minutes or less, and desirably 30 seconds or more and 10 minutes or less.

The pressing step can be carried out according to a publicly known method. Specifically, a pressure is applied to the above formed negative electrode active material layer 64 using, for example, a roller press, thereby carrying out the pressing step. Through the pressing step, the negative electrode active material layer 64 can be compressed to a predetermined density, and thereby, the graphite particles 12, the first Si-containing particles 14, and the second Si-containing particles 16 are filled densely. Thus, the negative electrode 60 is obtained.

The negative electrode 60 according to this embodiment can impart excellent capacity degradation resistance to a secondary battery when charge and discharge are repeated. Furthermore, since the negative electrode 60 according to this embodiment uses the negative electrode active material containing Si, the capacity of the secondary battery can be increased. Accordingly, the secondary battery using the negative electrode 60 according to this embodiment has high capacity and exhibits excellent cycle characteristics.

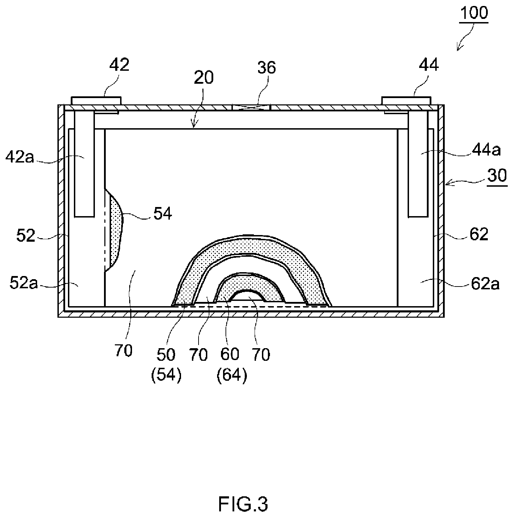

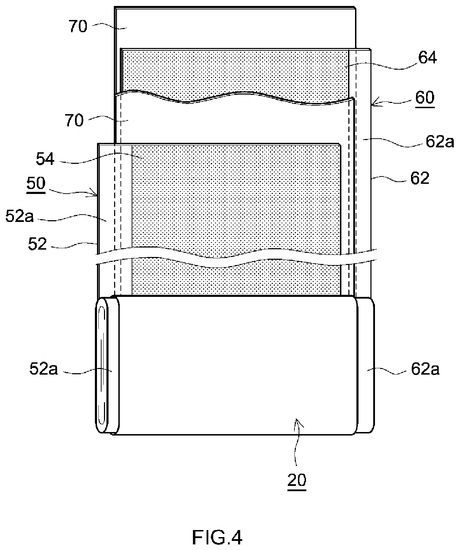

Then, in another aspect, the secondary battery disclosed herein includes a positive electrode, a negative electrode, and an electrolyte. The negative electrode is the negative electrode 60 according to the embodiment described above. An embodiment of the secondary battery disclosed herein will be described below using a lithium ion secondary battery as an example with reference to FIGs. 3 and 4. The following configuration example is a flat rectangular lithium ion secondary battery including a flat wound electrode body and a flat battery case.

A lithium ion secondary battery 100 shown in FIG. 3 is a sealed lithium ion secondary battery 100 constructed by housing a flat wound electrode body 20 and a nonaqueous electrolyte (not shown) in a flat rectangular battery case (that is, an outer container) 30. The battery case 30 is provided with a positive electrode terminal 42 and a negative electrode terminal 44 for external connection, and a thin safety valve 36 set to release an internal pressure when the internal pressure of the battery case 30 increases to a predetermined level or more. The battery case 30 is provided with an injection port (not shown) for injecting the nonaqueous electrolyte. The positive electrode terminal 42 is electrically connected to a positive electrode current collector plate 42a. The negative electrode terminal 44 is electrically connected to a negative electrode current collector plate 44a. A material for the battery case 30 is, for example, a metal material such as aluminum that is lightweight and has high thermal conductivity.

As shown in FIGs. 3 and 4, the wound electrode body 20 has a form in which a positive electrode sheet 50 and a negative electrode sheet 60 are stacked with two long separator sheets 70 interposed therebetween and wound in the longitudinal direction. The positive electrode sheet 50 has a configuration in which a positive electrode active material layer 54 is formed on one surface or both surfaces (herein, both surfaces) of a long positive electrode current collector 52 along the longitudinal direction. The negative electrode sheet 60 has a configuration in which a negative electrode active material layer 64 is formed on one surface or both surfaces (herein, both surfaces) of a long negative electrode current collector 62 along the longitudinal direction. A positive electrode active material layer non-formed portion 52a (that is, a portion where no positive electrode active material layer 54 is formed and the positive electrode current collector 52 is exposed) and a negative electrode active material layer non-formed portion 62a (that is, a portion where no negative electrode active material layer 64 is formed and the negative electrode current collector 62 is exposed) are formed to extend off outward from both ends of the wound electrode body 20 in the winding axis direction (that is, the sheet width direction orthogonal to the above longitudinal direction). The positive electrode current collector plate 42a and the negative electrode current collector plate 44a are respectively joined to the positive electrode active material layer non-formed portion 52a and the negative electrode active material layer non-formed portion 62a.

The positive electrode current collector 52 constituting the positive electrode sheet 50 may be a publicly known positive electrode current collector used in a lithium ion secondary battery, and examples of the positive electrode current collector 52 include sheets or foil made of highly conductive metals (for example, aluminum, nickel, titanium, and stainless steel, and the like). The positive electrode current collector 52 is desirably aluminum foil.

Dimensions of the positive electrode current collector 52 are not particularly limited, and may be appropriately determined depending on battery design. When aluminum foil is used as the positive electrode current collector 52, the thickness thereof is not particularly limited, and is, for example, 5 µm or more and 35 µm or less, and desirably 7 µm or more and 20 µm or less.

The positive electrode active material layer 54 contains a positive electrode active material. The positive electrode active material may be a positive electrode active material having a publicly known composition to be used in a lithium ion secondary battery. Specifically, for example, as the positive electrode active material, a lithium composite oxide, a lithium transition metal phosphate compound, and the like, may be used. The crystal structure of the positive electrode active material is not particularly limited, and may be a layered structure, a spinel structure, an olivine structure, or the like.

The lithium composite oxide is desirably a lithium transition metal composite oxide including at least one of Ni, Co, and Mn as a transition metal element, and specific examples of the lithium transition metal composite oxide include a lithium nickel composite oxide, a lithium cobalt composite oxide, a lithium manganese composite oxide, a lithium nickel manganese composite oxide, a lithium nickel cobalt manganese composite oxide, a lithium nickel cobalt aluminum composite oxide, a lithium iron nickel manganese composite oxide, and the like.

It should be noted that the "lithium nickel cobalt manganese composite oxide" in this specification includes not only oxides including Li, Ni, Co, Mn, and O as constituent elements, but also an oxide further including one or more additive elements other than the above constituent elements besides them. Examples of the additive elements include transition metal elements, typical metal elements and the like such as Mg, Ca, Al, Ti, V, Cr, Y, Zr, Nb, Mo, Hf, Ta, W, Na, Fe, Zn, and Sn. Furthermore, the additive element may be a metalloid element such as B, C, Si, and P, and a nonmetal element such as S, F, Cl, Br, and I. The same is applied to the lithium nickel composite oxide, the lithium cobalt composite oxide, the lithium manganese composite oxide, the lithium nickel manganese composite oxide, the lithium nickel cobalt aluminum composite oxide, the lithium iron nickel manganese composite oxide, and the like described above.

Examples of the lithium transition metal phosphate compound include lithium iron phosphate (LiFePO₄), lithium manganese phosphate (LiMnPO₄), lithium manganese iron phosphate, and the like.

These positive electrode active materials may be used alone or in combination of two or more types thereof. The positive electrode active material is particularly desirably the lithium nickel cobalt manganese composite oxide because of excellent characteristics such as initial resistance characteristic.

An average particle diameter (D50) of the positive electrode active material is not particularly limited, and is, for example, 0.05 µm or more and 25 µm or less, desirably 1 µm or more and 20 µm or less, and more desirably 3 µm or more and 15 µm or less.

The positive electrode active material layer 54 may include components other than the positive electrode active material, for example, trilithium phosphate, a conductive material, a binder, and the like. Suitable examples of the conductive material include: carbon black such as acetylene black (AB); carbon fibers such as vapor grown carbon fibers (VGCF) and carbon nanotubes (CNT); and other carbon materials (for example, graphite). Examples of the binder include polyvinylidene fluoride (PVdF) and the like.

The content of the positive electrode active material in the positive electrode active material layer 54 (that is, the content of the positive electrode active material with respect to the total mass of the positive electrode active material layer 54) is not particularly limited, and is desirably 70% by mass or more, more desirably 80% by mass or more, and further more desirably 85% by mass or more and 99% by mass or less. The content of trilithium phosphate in the positive electrode active material layer 54 is not particularly limited, and is desirably 0.1% by mass or more and 15% by mass or less, and more desirably 0.2% by mass or more and 10% by mass or less. The content of the conductive material in the positive electrode active material layer 54 is not particularly limited, and is desirably 0.1% by mass or more and 20% by mass or less, and more desirably 0.3% by mass or more and 15% by mass or less. The content of the binder in the positive electrode active material layer 54 is not particularly limited, and is desirably 0.4% by mass or more and 15% by mass or less, and more desirably 0.5% by mass or more and 10% by mass or less.

The thickness the positive electrode active material layer 54 per one surface of the positive electrode current collector is not particularly limited, and is usually 10 µm or more, and desirably 20 µm or more. On the other hand, this thickness is usually 400 µm or less, and desirably 300 µm or less.

As the negative electrode sheet 60, the above-mentioned negative electrode 60 is used.

Examples of a separator 70 include a porous sheet (film) of a resin such as polyethylene (PE), polypropylene (PP), polyester, cellulose, or polyamide. The porous sheet may have a single-layer structure or a laminated structure of two or more layers (for example, three-layer structure in which PP layers are stacked on each surface of a PE layer). A heat-resistance layer (HRL) may be provided on a surface of the separator 70.

The thickness of the separator 70 is not particularly limited, and is, for example, 5 µm or more and 50 µm or less, desirably 10 µm or more and 30 µm or less. An air permeability of the separators 70 obtained by a Gurley permeability test is not particularly limited, and is desirably 350 seconds/100 cc or less.

The nonaqueous electrolyte typically contains a nonaqueous solvent and a supporting salt (electrolyte salt). As the nonaqueous solvent, organic solvents such as carbonates, ethers, esters, nitriles, sulfones, and lactones to be used in an electrolytic solution of a typical lithium ion secondary battery can be used without any particular limitation. Among these, carbonates are desirable, and specific examples thereof include ethylene carbonate (EC), propylene carbonate (PC), diethyl carbonate (DEC), dimethyl carbonate (DMC), ethyl methyl carbonate (EMC), monofluoroethylene carbonate (FEC), difluoroethylene carbonate (DFEC), monofluoromethyl difluoromethyl carbonate (F-DMC), trifluorodimethyl carbonate (TFDMC), and the like. Such nonaqueous solvents may be used alone or in combination of two or more thereof appropriately. As an example, the nonaqueous solvent consists of carbonates. As another example, the nonaqueous solvent contains carbonates and esters such as methyl acetate.

Suitable examples of the supporting salt include lithium salts (desirably LiPF₆) such as LiPF₆, LiBF₄, and lithium bis(fluorosulfonyl)imide (LiFSI). The concentration of the supporting salt is desirably 0.7 mol/L or more and 1.3 mol/L or less.

It should be noted that the nonaqueous electrolytic solution above may include components other than the components described above, for example, various additives including a coating film formation agent such as vinylene carbonate (VC) and an oxalato complex; a gas generating agent such as biphenyl (BP) or cyclohexylbenzene (CHB); and a thickener, as long as the effects of the present disclosure are not significantly impaired.

In the lithium ion secondary battery 100, capacity degradation in repetitive charge and discharge is suppressed and capacity is high. The lithium ion secondary battery 100 is applicable to various applications. Examples of suitable applications include drive power sources to be mounted on vehicles such as battery electric vehicles (BEV), hybrid electric vehicles (HEV), and plug-in hybrid electric vehicles (PHEV). Furthermore, the lithium ion secondary battery 100 can be used as a storage battery for, for example, a small-size power storage device. The lithium ion secondary battery 100 can also be used in a form of a battery module in which typically a plurality of batteries is connected in series and/or in parallel.

In the above, the rectangular lithium ion secondary battery 100 including the flat-shaped wound electrode body 20 as an example is described. However, the lithium ion secondary battery can also be configured as a lithium ion secondary battery including a stacked-type electrode body (that is, an electrode body in which a plurality of positive electrodes and a plurality of negative electrodes are alternately stacked). Furthermore, the lithium ion secondary battery can also be configured as a cylindrical lithium ion secondary battery, a laminated-case lithium ion secondary battery, or the like.

Furthermore, according to a publicly known method, the lithium ion secondary battery 100 can also be configured as an all-solid-state lithium ion secondary battery using a solid-state electrolyte instead of the nonaqueous electrolyte.

Furthermore, the negative electrode 60 according to this embodiment is suitable as a negative electrode of a lithium ion secondary battery, and can also be constructed and used for negative electrodes of other secondary batteries. These other secondary batteries can be configured according to a publicly known method.

Hereinafter, Examples of the present disclosure will be described in detail, but the present disclosure is not intended to be limited to these Examples.

### <Production of Negative Electrode>

### [Example 1]

As negative electrode active materials, following materials were prepared.

First Si-containing particles: Si-C composite material, content rate of Si = 40% by mass, average particle diameter (D50) = 7 µm, consolidation density = 1.2 g/cm³

Second Si-containing particles: Si-C composite material, content rate of Si = 62% by mass, average particle diameter (D50) = 6 µm, consolidation density = 0.85g/cm³

Graphite particles (first graphite particles and second graphite particles): average particle diameter (D50) = 15 µm, molding pressure = 15MPa when 1 g of graphite particles were uniaxially pressurized and molded into a tablet having a density of 1.7 g/cm³ and diameter of 20 mm

It should be noted that content rates of Si in the first Si-containing particles and the second Si-containing particles were measured using a commercially available ICP-OEC device. The average particle diameter (D50) of each particle was measured using a commercially available laser diffraction and scattering type particle size distribution analyzer. The consolidation densities of the first Si-containing particles and the second Si-containing particles were measured by the following method.

As powder measurement sample, 1 g of the first Si-containing particles or the second Si-containing particles was weighed out, and set in a probe (20 mm in diameter) of an automatic powder resistance measurement system "MCP-PD600" (manufactured by Nittoseiko Analytech Co., Ltd.). Load and displacement when a pressure was uniaxially applied were measured using this automatic powder resistance measurement system at 25°C. Based on this, the bulk density of the molded body at a pressure of 60 MPa was obtained, and this was defined as the consolidation density. Furthermore, 1 g of graphite particles was measured as a powder measurement sample and set in a probe (20 mm in diameter) of an automatic powder resistance measurement system "MCP-PD 600" (manufactured by Nittoseiko Analytech Co., Ltd.). Load and displacement when pressure was uniaxially applied were measured using this automatic powder resistance measurement system at 25°C. Based on this, the molding pressure when the density of the molded body was 1.7 g/cm³ was obtained.

As a binder, carboxymethyl cellulose (CMC), polyacrylic acid (PAA), and styrene-butadiene rubber (SBR) were prepared. Furthermore, a dispersion of single-walled carbon nanotubes (SWCNT) as a conductive material was prepared.

A negative electrode paste containing graphite particles, first Si-containing particles, second Si-containing particles, CMC, PAA, SBR, and SWCNT at a mass ratio of 60:20:20:1:1:1:0.1 were prepared in the following procedure.

Firstly, the graphite particles, the first Si-containing particles, the second Si-containing particles, CMC, and PAA were dry-blended using a planetary mixer. The obtained mixture, SWCNT dispersion, and a dispersion medium were kneaded using the planetary mixer. To this, SBR and additional dispersion medium were added and mixed uniformly to produce a negative electrode paste.

The produced negative electrode paste was applied to a surface of copper foil with a thickness of 10 µm and dried, thereby forming a negative electrode active material layer. The negative electrode active material layer was roll-pressed, and then the resulting sheet was processed into a predetermined dimension, thereby obtaining a negative electrode sheet.

### [Example 2]

A negative electrode sheet of Example 2 was obtained in the same manner as in Example 1 except that particles of a Si-C composite material having a consolidation density of 1.0 g/cm³ and a content rate of Si of 51% by mass were used as the first Si-containing particles.

### [Example 3]

A negative electrode sheet of Example 3 was obtained in the same manner as in Example 1 except that the composition of the negative electrode paste was changed, that is, a negative electrode paste containing graphite particles, first Si-containing particles, second Si-containing particles, CMC, PAA, SBR, and SWCNT at a mass ratio of 60:16:24:1:1:1:0.1 were used.

### [Example 4]

A negative electrode sheet of Example 4 was obtained in the same manner as in Example 1 except that the composition of the negative electrode paste was changed, that is, a negative electrode paste containing graphite particles, first Si-containing particles, second Si-containing particles, CMC, PAA, SBR, and SWCNT at a mass ratio of 60:12:28:1:1:1:0.1 were used.

### [Example 5]

A negative electrode sheet of Example 5 was obtained in the same manner as in Example 1 except that particles of a Si-C composite material having a consolidation density of 0.8 g/cm³ and a content rate of Si of 64% by mass were used as the second Si-containing particles.

### [Example 6]

A negative electrode sheet of Example 6 was obtained in the same manner as in Example 1 except that particles of a Si-C composite material having a consolidation density of 0.72 g/cm³ and a content rate of Si of 58% by mass were used as the second Si-containing particles.

### [Comparative Example 1]

A negative electrode sheet of Comparative Example 1 was obtained in the same manner as in Example 1 except that particles of a Si-C composite material having a consolidation density of 0.8 g/cm³ and a content rate of Si of 43% by mass were used as the first Si-containing particles, and particles of a Si-C composite material having a consolidation density of 1.1 g/cm³ and a content rate of Si of 60% by mass were used as the second Si-containing particles.

### [Comparative Example 2]

A negative electrode sheet of Comparative Example 2 was obtained in the same manner as in Example 1 except that particles of a Si-C composite material having a consolidation density of 1.1 g/cm³ and a content rate of Si of 60% by mass were used as the second Si-containing particles.

### [Comparative Example 3]

A negative electrode sheet of Comparative Example 3 was obtained in the same manner as in Example 1 except that particles of a Si-C composite material having a consolidation density of 0.8 g/cm³ and a content rate of Si of 43% by mass were used as the first Si-containing particles, and particles of a Si-C composite material having a consolidation density of 0.85 g/cm³ and a content rate of Si of 62% by mass were used as the second Si-containing particles.

### [Comparative Example 4]

A negative electrode sheet of Comparative Example 4 was obtained in the same manner as in Example 1 except that the second Si-containing particles were not used, and a negative electrode paste containing graphite particles, first Si-containing particles, CMC, PAA, SBR, and SWCNT at a mass ratio of 60:40:1:1:1:0.1 were used.

### [Comparative Example 5]

A negative electrode sheet of Comparative Example 5 was obtained in the same manner as in Example 1 except that the first Si-containing particles were not used, and a negative electrode paste containing graphite particles, second Si-containing particles, CMC, PAA, SBR, and SWCNT at a mass ratio of 60:40:1:1:1:0.1 were used.

### <Production of Evaluation Lithium Ion Secondary Battery>

LiNi_{1/3}Co_{1/3}Mn_{1/3}O₂ (NCM) as positive electrode active material powder, acetylene black (AB) as a conductive material, and polyvinylidene fluoride (PVdF) as a binder were mixed with N-methylpyrrolidone (NMP) at a mass ratio of NCM:AB:PVdF = 100:1:1 to prepare a positive electrode paste. This paste was applied to a surface of an aluminum foil with a thickness of 15 µm and dried, thereby forming a positive electrode active material layer. The positive electrode active material layer was roll pressed, and then, the resulting sheet was processed into a predetermined dimension to obtain a positive electrode sheet.

A porous polyolefin separator was prepared. Leads were respectively attached to the negative electrode sheet and the positive electrode sheet produced mentioned above, and the negative and positive electrode sheets were stacked with a separator interposed therebetween to produce an electrode body. The electrode body, together with a nonaqueous electrolytic solution, was housed in a case made of an aluminum laminated film. As the nonaqueous electrolytic solution, a nonaqueous electrolytic solution obtained by dissolving LiPF₆ as a supporting salt at a concentration of 1.0 mol/L in a mixed solvent including ethylene carbonate (EC), fluoroethylene carbonate (FEC), ethyl methyl carbonate (EMC), and dimethyl carbonate (DMC) at a volume ratio of 15:5:35:45 was used. Thereafter, the case was sealed to obtain an evaluation lithium ion secondary battery.

### <Cycle Characteristic Evaluation>

Each evaluation lithium ion secondary battery produced above was placed in an environment at 25°C. Each evaluation lithium ion secondary battery was charged to 4.2 V with a constant current of 0.4 C, and then, charged with a constant voltage until the electric current value became 0.1 C. Then, each evaluation lithium ion secondary battery was discharged to 2.5 V with a constant current of 0.4 C. Then, a discharge capacity at this time was measured to obtain an initial capacity.

The above charging and discharging was defined as one cycle, and 200 cycles of the charging and discharging were repeated. A discharge capacity after 200 cycles was obtained in a manner similar to that for the initial capacity. As an index of the cycle characteristics, a capacity retention rate (%) was obtained from "(discharge capacity after 200 cycles of charging and discharging / initial capacity) × 100". Results are shown in Table 1.

### [Table 1]

**Table 1**

| | Consolidation density (g/cm³) | | Content rate of Si (% by mass) | | Si-containing particles mixing ratio First:Second | Capacity retention rate (%) |
|---|---|---|---|---|---|---|
| | First Si-containing particle | Second Si-containing particle | First Si-containing particle | Second Si-containing particle | | |
| Example 1 | 1.2 | 0.85 | 40 | 62 | 50:50 | 88 |
| Example 2 | 1.0 | 0.85 | 51 | 62 | 50:50 | 84 |
| Example 3 | 1.2 | 0.85 | 40 | 62 | 40:60 | 86 |
| Example 4 | 1.2 | 0.85 | 40 | 62 | 30:70 | 83 |
| Example 5 | 1.2 | 0.80 | 40 | 64 | 50:50 | 85 |
| Example 6 | 1.2 | 0.72 | 40 | 58 | 50:50 | 87 |
| Comparative Example 1 | 0.8 | 1.1 | 43 | 60 | 50:50 | 75 |
| Comparative Example 2 | 1.2 | 1.1 | 40 | 60 | 50:50 | 79 |
| Comparative Example 3 | 0.8 | 0.85 | 43 | 62 | 50:50 | 71 |
| Comparative Example 4 | 1.2 | - | 40 | - | 100:0 | 74 |
| Comparative Example 5 | - | 0.85 | - | 62 | 0:100 | 67 |

The results of Table 1 show that the capacity retention rate after 200 cycles of charge and discharge is significantly high when the content rate of Si in the first Si-containing particles is smaller than the content rate of Si in the second Si-containing particles, and the consolidation density of the first Si-containing particles is 0.9 g/cm³ or more, and the consolidation density of the second Si-containing particles is less than 0.9 g/cm³. Therefore, it can be understood that the negative electrode according to the present disclosure can suppress capacity degradation when the secondary battery is repeatedly charged and discharged.

In the above, specific examples of the present disclosure have been described in detail, but they are merely examples, and are not intended to limit the scope of the claims. The techniques described in the claims include various modifications and changes of the above exemplified specific examples.

That is, the negative electrode of the secondary battery, the method for manufacturing the negative electrode, and the secondary battery of the present disclosure are the following items [1] to [10].
[1] A negative electrode of a secondary battery, including:
   a negative electrode current collector; and
   a negative electrode active material layer supported by the negative electrode current collector; wherein
   the negative electrode active material layer contains graphite particles, first Si-containing particles, and second Si-containing particles,
   a content rate of Si in the first Si-containing particles is smaller than a content rate of Si in the second Si-containing particles, and
   a consolidation density of the first Si-containing particles is 0.9 g/cm³ or more and a consolidation density of the second Si-containing particles is less than 0.9 g/cm³ when a density of a molded body obtained by uniaxially pressurizing and molding 1 g of particles at 25°C and at 60 MPa into a tablet having a diameter of 20 mm is defined as a consolidation density.
[2] The negative electrode according to the item [1], wherein the consolidation density of the first Si-containing particles is 0.95 g/cm³ or more and 1.8 g/cm³ or less.
[3] The negative electrode according to the item [1] or [2], wherein the consolidation density of the second Si-containing particles is 0.65 g/cm³ or more and 0.85 g/cm³ or less.
[4] The negative electrode according to any one of the items [1] to [3], wherein a mass ratio between the first Si-containing particles and the second Si-containing particles is 20:80 to 80:20.
[5] The negative electrode according to any one of the items [1] to [4], wherein a ratio of the content rate of Si in the first Si-containing particles with respect to the content rate of Si in the second Si-containing particles is 0.10 to 0.90.
[6] The negative electrode according to any one of the items [1] to [5], wherein the content rate of Si in the first Si-containing particles is 20% by mass to 55% by mass, and the content rate of Si in the second Si-containing particles is 45% by mass to 80% by mass.
[7] The negative electrode according to any one of the items [1] to [6], wherein a content rate of the graphite particles with respect to a total of the graphite particles, the first Si-containing particles, and the second Si-containing particles is 40% by mass to 90% by mass.
[8] The negative electrode according to any one of the items [1] to [7], wherein
   a ratio of an average particle diameter (D50) of the graphite particles with respect to an average particle diameter (D50) of the first Si-containing particles is 1.0 to 8.0, and
   a ratio of an average particle diameter (D50) of the graphite particles with respect to an average particle diameter (D50) of the second Si-containing particles is 1.0 to 8.0.
[9] A method for manufacturing a negative electrode of a secondary battery, the method including steps of:
   preparing a negative electrode paste containing graphite particles, first Si-containing particles, second Si-containing particles, and a dispersion medium;
   applying the negative electrode paste to a negative electrode current collector;
   drying the applied negative electrode paste to form a negative electrode active material layer; and
   pressing the negative electrode active material layer, wherein
   a content rate of Si in the first Si-containing particles is smaller than a content rate of Si in the second Si-containing particles,
   a consolidation density of the first Si-containing particles is 0.9 g/cm³ or more and a consolidation density of the second Si-containing particles is less than 0.9 g/cm³ when a density of a molded body obtained by uniaxially pressurizing and molding 1 g of particles at 25°C and at 60 MPa into a tablet having a diameter of 20 mm is defined as a consolidation density of particles.
[10] A secondary battery including
   a positive electrode;
   a negative electrode; and
   an electrolyte,
   wherein the negative electrode is the negative electrode according to any one of the items [1] to [8].

## Claims

1. A negative electrode (60) of a secondary battery (100), comprising:
a negative electrode current collector (62); and
a negative electrode active material layer (64) supported by the negative electrode current collector (62); wherein
the negative electrode active material layer (64) contains graphite particles (12), first Si-containing particles (14), and second Si-containing particles (16),
a content rate of Si in the first Si-containing particles (14) is smaller than a content rate of Si in the second Si-containing particles (16), and
a consolidation density of the first Si-containing particles (14) is 0.9 g/cm³ or more and a consolidation density of the second Si-containing particles (16) is less than 0.9 g/cm³ when a density of a molded body obtained by uniaxially pressurizing and molding 1 g of particles at 25°C and at 60 MPa into a tablet having a diameter of 20 mm is defined as a consolidation density.

2. The negative electrode (60) according to claim 1, wherein the consolidation density of the first Si-containing particles (14) is 0.95 g/cm³ or more and 1.8 g/cm³ or less.

3. The negative electrode (60) according to claim 1, wherein the consolidation density of the second Si-containing particles (16) is 0.65 g/cm³ or more and 0.85 g/cm³ or less.

4. The negative electrode (60) according to claim 1, wherein a mass ratio between the first Si-containing particles (14) and the second Si-containing particles (16) is 20:80 to 80:20.

5. The negative electrode (60) according to claim 1, wherein a ratio of the content rate of Si in the first Si-containing particles (14) with respect to the content rate of Si in the second Si-containing particles (16) is 0.10 to 0.90.

6. The negative electrode (60) according to claim 1, wherein the content rate of Si in the first Si-containing particles (14) is 20% by mass to 55% by mass, and the content rate of Si in the second Si-containing particles (16) is 45% by mass to 80% by mass.

7. The negative electrode (60) according to claim 1, wherein a content rate of the graphite particles (12) with respect to a total of the graphite particles (12), the first Si-containing particles (14), and the second Si-containing particles (16) is 40% by mass to 90% by mass.

8. The negative electrode (60) according to claim 1, wherein
a ratio of an average particle diameter (D50) of the graphite particles (12) with respect to an average particle diameter (D50) of the first Si-containing particles (14) is 1.0 to 8.0, and
a ratio of an average particle diameter (D50) of the graphite particles (12) with respect to an average particle diameter (D50) of the second Si-containing particles (16) is 1.0 to 8.0.

9. A method for producing a negative electrode (60) of a secondary battery (100), the method comprising steps of:
preparing a negative electrode paste containing graphite particles (12), first Si-containing particles (14), second Si-containing particles (16), and a dispersion medium;
applying the negative electrode paste to a negative electrode current collector (62);
drying the applied negative electrode paste to form a negative electrode active material layer (64); and
pressing the negative electrode active material layer (64), wherein
a content rate of Si in the first Si-containing particles (14) is smaller than a content rate of Si in the second Si-containing particles (16),
a consolidation density of the first Si-containing particles (14) is 0.9 g/cm³ or more and a consolidation density of the second Si-containing particles (16) is less than 0.9 g/cm³ when a density of a molded body obtained by uniaxially pressurizing and molding 1 g of particles at 25°C and at 60 MPa into a tablet having a diameter of 20 mm is defined as a consolidation density of particles.

10. A secondary battery (100) comprising
a positive electrode (50);
a negative electrode (60); and
an electrolyte,
wherein the negative electrode (60) is the negative electrode (60) according to claim 1.
